# EUROPÄISCHE PATENTSCHRIFT

(11) **EP 0 990 605 B1**
(45) Veröffentlichungstag und Bekanntmachung des Hinweises auf die Patenterteilung: **03.03.2004**
(21) Anmeldenummer: 99115371.9
(22) Anmeldetag: 04.08.1999
(51) Int. Cl.: B65G 27/04, B65G 47/14

(54) **Schienenartige Förderstrecke**
Rail-like transporting track
Chemin de transport en forme de rail

(30) Priorität: 30.09.1998 DE 19844796
(43) Veröffentlichungstag der Anmeldung: 05.04.2000
(73) Patentinhaber: Feintool International Holding, 3250 Lyss (CH)
(72) Erfinder: Kumeth, Sigmund, 92280 Kastl (DE)
(74) Vertreter: Matschkur, Lindner Blaumeier Patent- und Rechtsanwälte

(56) Entgegenhaltungen:
- US-A- 3 900 131
- US-A- 4 700 827
- US-A- 4 732 296
- US-A- 5 630 497

## Beschreibung

Die Erfindung betrifft eine schienenartige Förderstrecke, mit einer Führungsnut, längs welcher zu bearbeitendes oder bearbeitetes Fördergut, insbesondere mit einem Werkzeug einer Fertigungs- oder Montagevorrichtung zu verbauende Kleinteile förderbar ist, und welche mit einer Abdeckung versehen ist, die die Förderstrecke zumindest über einen Teil ihrer Länge und/oder Breite abdeckt, wobei die Abdeckung schwenk- oder klappbar gelagert und zwischen einer die Fördernut abdeckenden und einer nicht-abdeckenden Stellung bewegbar ist.

Solche Förderstrecken kommen beispielsweise bei Fertigungs- oder Montagevorrichtungen zum Einsatz, mittels denen aus mehreren Teilen bestehende Werkstücke, beispielsweise elektrotechnischer Art, in mehreren nacheinander folgenden Arbeitsstationen verbaut werden. Auf diesen Förderstrecken werden die zu verbauenden Teile, oder aber bereits teilweise zusammengebaute Komponenten gefördert. Solche Förderstrecken kommen aber auch beispielsweise bei für solche Fertigungs- oder Montagevorrichtungen vorgesehenen Zuführvorrichtung zum Einsatz, mittels welchen beispielsweise kleine Kunststoffteile aus einer losen Schüttung über die Förderstrecke an die Vorrichtung zur Weiterförderung gegeben werden. Die Förderung erfolgt dabei mittels eines Linearförderers, welcher in der Regel im Bereich unterhalb der schienenartigen Förderstrecke angeordnet ist und diese in Schwingungen versetzt, was dazu führt, daß die aneinandergereihten Kleinteile jeweils um ein kurzes Stück nach vorne geworfen werden, wodurch die Förderung erfolgt.

Um zu vermeiden, daß die Kleinteile während der Förderbewegung aus der schienenartigen Förderstrecke herausspringen, ist in der Regel eine Abdeckung vorgesehen, die die Förderstrecke zumindest teilweise abdeckt und ein Herausbewegen der Kleinteile verhindert. Trotz allem kann es jedoch infolge einer Bauteilverkantung oder dgl. zu Schwierigkeiten längs der Förderstrecke kommen, die in einem Stau resultieren. Um diesen zu beheben, ist es bei bisher bekannten Förderstrecken erforderlich, die an der Förderstrecke festgeschraubte Abdeckung durch Lösen der Schrauben zu entfernen, ansonsten ist ein Zugriff zur Behebung der Störung nicht möglich. Diese Entfernung ist sehr umständlich und zeitaufwendig, die Behebung des Staus dauert also relativ lange, wobei die Anlage während dieser Zeit nicht arbeiten kann.

Aus US-A-4,700,827 ist eine sehr breite Förderstrecke mit einer ebenfalls sehr groß bemessenen, die Förderstrecke übergreifenden Abdeckung bekannt, die aus der abdeckenden Stellung in eine geöffnete Stellung, in der sie verbleibt, verschwenkt werden kann.

Ferner ist aus US-A-5,630,497 ein Vibrationsförderer mit einer Abdeckung bekannt, wobei auch dort die Abdeckung aus der abdeckenden Stellung in eine geöffnete Stellung schwenkbar ist, in welcher sie verbleibt.

Schließlich ist aus US-A-4,732,296 eine Förderstrecke bekannt, bei der die Abdeckung um eine quer zur Förderrichtung stehenden Achse verschwenkt werden kann.

Der Erfindung liegt damit das Problem zugrunde, eine schienenartige Förderstrecke anzugeben, bei der eine auftretende Störung, zum Beispiel ein Fördergutstau ohne großen Aufwand beseitigt werden kann.

Zur Lösung dieses Problems ist bei einer schienenartigen Förderstrecke der eingangs genannten Art erfindungsgemäß vorgesehen, daß die Abdeckung gegen eine Rückstellkraft, die mittels eines oder mehrerer Federelemente erzeugt wird, aus der abdeckenden Stellung bewegbar ist, wobei das oder die Federelemente die Abdeckung in die abdeckende Stellung drängen.

Die Erfindung geht also ab von der bisher bekannten festen Fixierung der Abdeckung durch Anschrauben. Die vorgesehene Schwenk- oder Klappbarkeit der Abdeckung ermöglicht es, die Abdeckung im Falle einer Störung mühelos aufzuschwenken oder aufzuklappen, so daß die Störung sofort behoben werden kann. Die aufwendigen Arbeiten, wie sie bei Förderstrecken des Standes der Technik erforderlich sind, entfallen hier vollständig, da das Öffnen der Abdeckung mittels eines einzigen Handgriffs möglich ist. Die Beseitigung der Störung kann also in kürzester Zeit folgen, so daß der weitere Betrieb der Anlage sofort wieder aufgenommen werden kann.

Dabei hat es sich als zweckmäßig erwiesen, wenn die Abdeckung gegen eine Rückstellkraft aus der abdeckenden Stellung bewegbar ist, das heißt, die Abdeckung selbst wird bedingt durch die angreifende Rückstellkraft primär in der abdeckenden Stellung gehalten, so daß ein versehentliches Öffnen nicht möglich ist. Zur Erzeugung der Rückstellkraft sind erfindungsgemäß ein oder mehrere Federelemente vorgesehen, die die Abdeckung in die abdeckende Stellung drängen. Diese Federelemente können dabei beliebig ausgestaltet und angeordnet sein, solange sie die Abdeckung in der geschlossenen Stellung halten. Eine zweckmäßige Erfindungsausgestaltung sieht in diesem Zusammenhang vor, daß die als Sprialfedern ausgebildeten Federelemente in an der Förderstrecke vorgesehenen Ausnehmungen aufgenommen und mit einem Ende gehaltert sind, und daß sie mit dem anderen Ende an der Unterseite der Abdeckung befestigt sind.

Im Rahmen einer ersten Erfindungsausgestaltung kann die Abdeckung um ein scharnierartiges Drehgelenk schwenkbar gelagert sein, das heißt, die Abdeckung ist um eine Drehachse verschwenkbar. Hier kann beispielsweise ein Scharnier nach Art eines Türbandes zum Einsatzes kommen, welches mit einem Band an der Förderstrecke, mit dem anderen Band an der Abdeckung befestigt ist.

Eine besonders vorteilhafte Ausgestaltung sieht hierzu alternativ vor, daß an der Abdeckung eine Kippkante ausgebildet ist, um welche die Abdeckung kippbar ist. In diesem Fall kommt also keine Drehgelenkverbindung zum Einsatz, vielmehr ist die Abdeckung selbst um die entsprechende Kante kippbar, wobei die Abdeckung in diesem Fall mit entsprechenden Mitteln an der Förderstrecke gehaltert ist, beispielsweise allein mit den in den Ausnehmungen vorgesehenen Spiralfedern, die bereits für eine hinreichende Fixierung ausreichend sind. Auf jeden Fall können zusätzlich Mittel zur Führung und/oder Fixierung der Abdeckung gegen ein Veschieben der Abdeckung auf der Förderstrecke vorgesehen sein, was insbesondere im Fall der kippbaren Ausgestaltung zweckmäßig ist. Als solche Mittel können beispielsweise Stifte, insbesondere Zylinderstifte oder dgl. vorgesehen sein, die in Ausnehmungen der Förderstrecke gehaltert sind, und an denen die Abdekkung zumindest in der abdeckenden Stellung angreift.

Wenngleich die Abdeckung derart ausgeführt sein kann, daß sie manuell in der nicht-abdeckenden Stellung gehalten werden muß, hat es sich demgegenüber als zweckmäßig erwiesen, wenn die Abdeckung in der nicht-abgedeckten Stellung selbsthalternd ist, wobei dies beispielsweise dadurch realisiert sein kann, daß im Bereich der Kippkante eine Auflageebene vorgesehen ist, auf welcher die Abdekkung im geöffneten Zustand aufliegt, und die von ihrer Ausgestaltung her so ausgelegt ist, daß auch die Rückstellkraft die Abdeckung nicht aus dieser Stellung bewegt. Alternativ hierzu können auch Haltemittel vorgesehen sein, mit welchen die Abdeckung, die ansonsten manuell zu halten wäre, feststellbar ist. Diese Haltemittel können beispielsweise als Rast- oder Klemmmittel ausgebildet sein, die an der geöffneten Abdeckung angreifen.

Neben der Förderstrecke selbst betrifft die Erfindung ferner eine Vorrichtung umfassend wenigstens eine eine Abdeckung aufweisende Förderstrecke zum Fördern von stückartigem, zu bearbeitendem oder bearbeitetem Fördergut, insbesondere eine Fertigungs- oder Montagevorrichtung zum Fertigen oder Montieren eines Werkstücks oder eine Zuführvorrichtung für eine Fertigungs- oder Montagevorrichtung zum Zuführen der zu bearbeitenden Stückgüter. Diese Vorrichtung zeichnet sich dadurch aus, daß die oder sämtliche vorgesehenen Förderstrecken gemäß der vorbeschriebenen Art ausgebildet sind.

Weitere Vorteile, Merkmale und Einzelheiten der Erfindung ergeben sich aus dem im folgenden Ausführungsbeispiel sowie anhand der Zeichnungen. Dabei zeigen:
- Fig. 1: eine Seitenansicht einer Zuführvorrichtung zum Zuführen von losem Fördergut zu einer nachgeschalteten Bearbeitungsvorrichtung,
- Fig. 2: eine Aufsicht auf die Vorrichtung aus Fig. 1,
- Fig. 3: eine Schnittansicht durch die Förderstrecke der Vorrichtung aus Fig. 1 in Richtung in Linie der III - III, mit in abdeckender Stellung befindlicher Abdeckung,
- Fig. 4: eine Ansicht gemäß Fig. 3 mit einer in nicht-abdeckender Stellung befindlicher Abdeckung, und
- Fig. 5: einen Schnitt durch die Förderstrecke der Vorrichtung aus Fig. 1 in Richtung der Linie IV - IV.

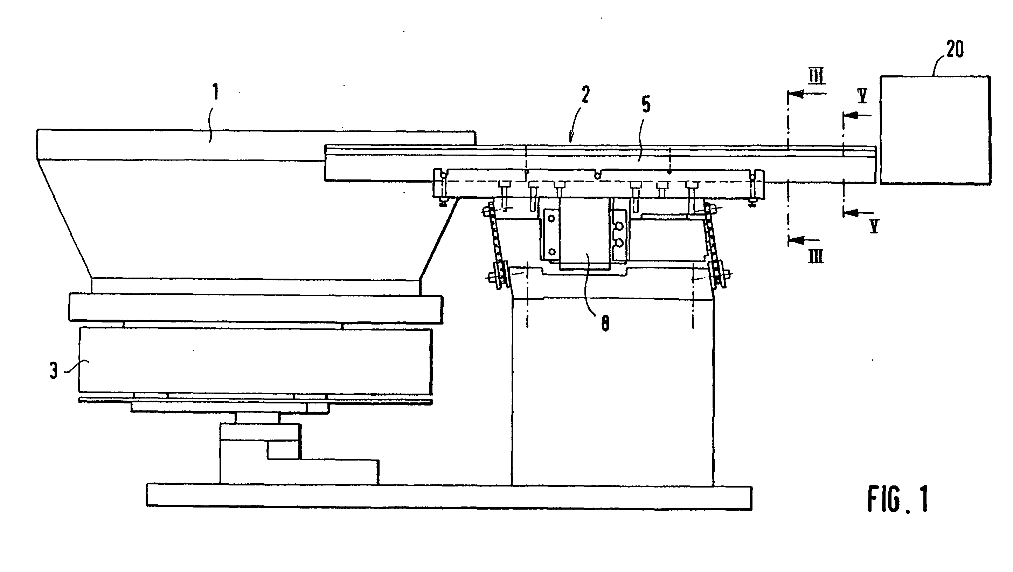

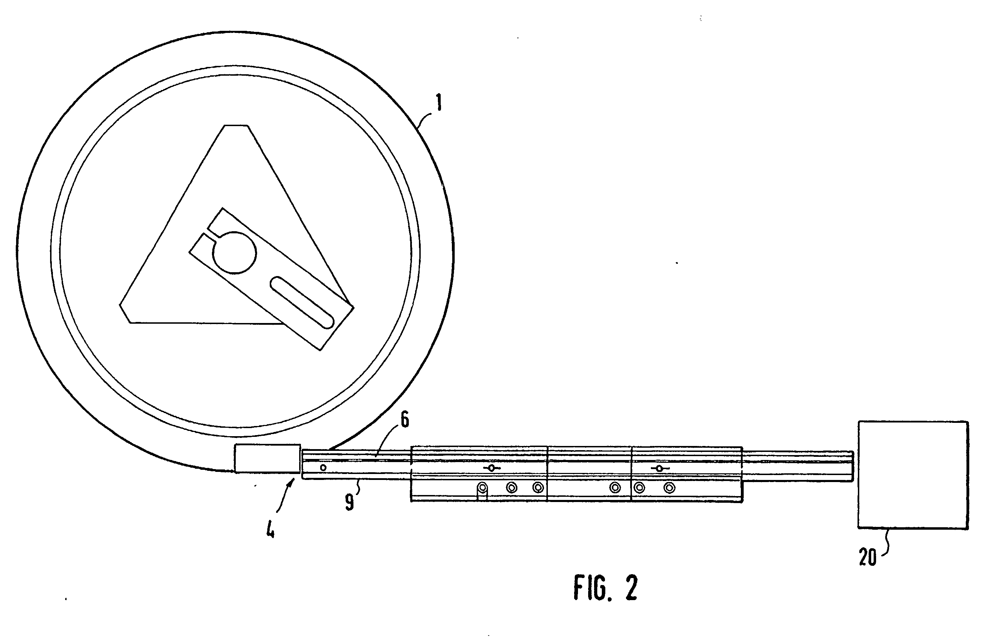

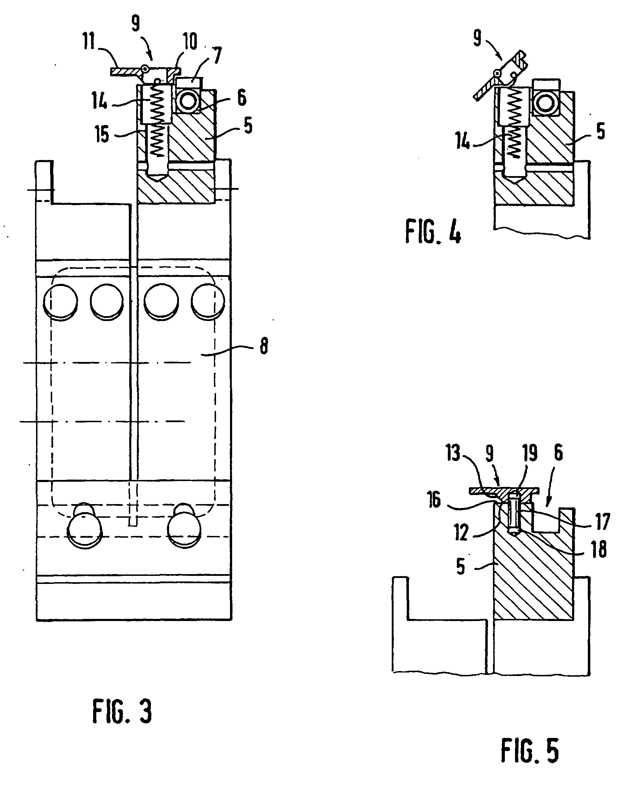

Fig. 1 zeigt eine Seitenansicht einer Zuführvorrichtung, an welcher eine erfindungsgemäße Förderstrecke vorgesehen ist. Die Zuführvorrichtung dient zum Vereinzeln, Ordnen und Zuführen der in einem Fördertopf 1 in loser Schüttung vorliegenden Kleinteile über die Förderstrecke 2 an eine nachgeschaltete Arbeitsstation 20, beispielsweise in Form einer Fertigungs- oder Montagevorrichtung in Form eines Rundtaktautomaten oder eines Lineartaktautomaten. Der Fördertopf 1 ist mit einem Wendelförderer 3 verbunden, welcher den Fördertopf 1 in rotationsfähige Schwingungen versetzt. Durch schräg eingebaute Federn entsteht eine vertikale und eine horizontale Schwingungsamplitude. Durch diese Art der Schwingung entsteht ein sogenannter Mikrowurf, der die Teile im Fördertopf an den eingearbeiteten, nicht näher gezeigten Wendeln von unten nach oben wandern läßt. Im Bereich der Übergabestelle 4, siehe Fig. 2, werden die im Fördertopf angeförderten Teile an die Förderstrecke 2 übergeben. Die Förderstrecke 2 ist schienenartig ausgebildet und besteht aus einem geradlinigen Schienenteil 5, in dem eine entsprechende Führungsnut 6 (siehe Fig. 3, 4) vorgesehen ist, in dem die Teile 7 in ausgerichteter und geordneter Weise hintereinander angeordnet transportiert werden. Für diesen Transport ist die Förderstrecke 2 mit einem Linearförderer 8 verbunden. Der Linearförderer dient ebenfalls dazu, die Förderstrecke 2 bzw. die Förderschiene 5 in Schwingungen zu versetzen, um die in der Führungsnut 6 befindlichen Teile durch Mikrowürfe vorwärts zu transportieren.

Um zu verhindern, daß die in der Fördernut 6 befindlichen Teile aus dieser herausfallen, ist eine Abdeckung 9 vorgesehen, siehe Fig. 2 - 5. Diese Abdeckung 9 ist an dem Schienenteil 5 im gezeigten Ausführungsbeispiel klappbar gelagert. Die Abdeckung weist einen über die Führungsnut 6 greifenden Vorsprung 10 sowie einen am entgegengesetzten Ende befindlichen Handhabungsabschnitt 11 auf. Ferner ist eine Kippkante 12 mit zugeordneter Auflageebene 13 vorgesehen. Die Abdeckung 9 ist über die Kippkante 12 aus der in Fig. 3 gezeigten abdeckenden Stellung in die in Fig. 4 gezeigte nicht-abdeckende Stellung klappbar. Hierdurch kann auf einfache Weise die Führungsnut 6 geöffnet werden, so daß ein etwaiger Stau oder dgl. ohne Probleme und ohne aufwendiges Entfernen der Abdeckung behoben werden kann.

Zur Lagerung der Abdeckung 9 sind mehrere Federelemente 14 in Form von Spiralfedern vorgesehen. Diese sind in Aufnahmen 15 in dem Schienenteil 5 mit einem Ende befestigt, das andere Ende greift an der Unterseite der Abdeckung 9 an. Wird nun die Abdeckung 9 um die Kippkante 12 herumgeklappt, so wird gleichzeitig das Federelement 14, das in der in Fig. 3 gezeigten abdeckenden Stellung bereits etwas vorgespannt ist, um die Abdeckung 9 sicher in die abdekkende Stellung zu drängen, noch weiter gespannt, das heißt, es wird die ohnehin wirkende Rückstellkraft noch verstärkt. Wird die Abdeckung nun soweit aufgeklappt, daß sie mit der Auflageebene 13 auf der Oberseite 16 der Förderschiene 4 aufliegt, wird die Abdeckung 9 in dieser Stellung trotz stark gespanntem Federelement 14 gehalten, da aufgrund der Lage und Ausbildung der Auflageebene 13 die Rückstellkraft die Abdeckung nicht in die in Fig. 3 gezeigte abdeckende Stellung zurückziehen kann. Der Monteur kann also ohne weiteres die Abdeckung 9 aufklappen und muß sie während der Behebung der Störung nicht mit einer Hand offen halten.

Wenngleich sich bereits mit den Federnelementen 14 allein eine hinreichende Fixierung und Führung der Abdeckung 9 insbesondere gegen ein Verrutschen längs der Förderschiene 4 erreichen läßt, hat es sich als zweckmäßig erwiesen, wenn weitere Führungsmittel vorgesehen sind. Diese sind im gezeigten Ausführungsbeispiel als Zylinderstifte 17 ausgeführt, die in einer entsprechenden Ausnehmung 18 an der Förderschiene 4, die natürlich versetzt zur jeweiligen Ausnehmung 15 angebracht ist, gehaltert und ragen mit ihrem oberen Ende hervor. An der Abdekkung 9 ist eine entsprechende Ausnehmung 19 vorgesehen, in welche der jeweilige Zylinderstift 17 in der in Fig. 5 gezeigten geschlossenen Stellung eingreift.

Neben der beschriebenen Ausführungsform einer klappbar gelagerten Abdeckung kann diese auch mittels eines Scharniers schwenkbar gelagert sein. In diesem Fall wäre die Abdeckung 9 an einem Band des Scharniers befestigt, das andere Scharnierband wäre an dem Schienenteil 5 angebracht. Auch in diesem Fall kann natürlich eine entsprechende Federlagerung vorgesehen sein, die fixierenden Zylinderstifte werden bei dieser Ausführungsform jedoch nicht benötigt, da eine Sicherung gegen Verrutschen bereits durch die Scharnierlagerung gegeben ist.

Die erfindungsgemäße Förderstrecke kann bei sämtlichen geradlinigen Förderern eingesetzt werden. Neben dem bereits beschriebenen Beispiel der Zuführvorrichtung kann sie auch bei als Lineartaktautomaten ausgebildete Fertigungs- oder Montagevorrichtungen zum Einsatz kommen. Die Förderstrecke 2 selbst kann dabei sowohl ohne als auch in Verbindung mit einem Linearförderer (Schwingförderer) eingesetzt werden.

## Patentansprüche

1. Schienenartige Förderstrecke, mit einer Führungsnut, längs welcher zu bearbeitendes oder bearbeitetes Fördergut, insbesondere mit einem Werkzeug einer Fertigungs- oder Montagevorrichtung zu verbauende Kleinteile förderbar ist, und welche mit einer Abdeckung versehen ist, die die Förderstrecke zumindest über einen Teil ihrer Länge und/oder Breite abdeckt, wobei die Abdeckung (9) schwenk- oder klappbar gelagert und zwischen einer die Fördernut (6) abdeckenden und einer nicht-abdeckenden Stellung bewegbar ist, **dadurch gekennzeichnet, daß** die Abdeckung (9) gegen eine Rückstellkraft, die mittels eines oder mehrerer Federelemente (14) erzeugt wird, aus der abdeckenden Stellung bewegbar ist, wobei das oder die Federelemente (14) die Abdeckung (9) in die abdeckende Stellung drängen.

2. Förderstrecke nach Anspruch 1, **dadurch gekennzeichnet, daß** die als Spiralfedern ausgebildeten Federelemente (14) in an der Förderstrecke (2) vorgesehenen Ausnehmungen (15) aufgenommen und mit einem Ende gehaltert sind, und mit dem anderen Ende an der Unterseite der Abdeckung (9) befestigt sind.

3. Förderstrecke nach einem der vorangehenden Ansprüche, **dadurch gekennzeichnet, daß** die Abdeckung um ein scharnierartiges Drehgelenk schwenkbar ist.

4. Förderstrecke nach Anspruch 1 oder 2, **dadurch gekennzeichnet, daß** an der Abdeckung (9) eine Kippkante (12) ausgebildet ist, um welche die Abdeckung (9) kippbar ist.

5. Förderstrecke nach einem der vorangehenden Ansprüche, **dadurch gekennzeichnet, daß** die Abdeckung (9) in der nicht-abdeckenden Stellung selbsthalternd oder mit Haltemitteln feststellbar ist.

6. Förderstrecke nach Anspruch 5, **dadurch gekennzeichnet, daß** zur Ermöglichung der Selbsthalterung im Bereich der Kippkante (12) eine Auflageebene (13) vorgesehen ist, mit welcher die Abdeckung (9) im geöffneten Zustand aufliegt.

7. Förderstrecke nach Anspruch 5, **dadurch gekennzeichnet, daß** die Haltemittel als Rast- oder Klemmittel ausgebildet sind, die an der geöffneten Abdeckung angreifen.

8. Förderstrecke nach einem der vorangehenden Ansprüche, **dadurch gekennzeichnet, daß** Mittel zur Führung und/oder Fixierung der Abdeckung (9) gegen ein Verschieben der Abdeckung (9) auf der Förderstrecke (2) vorgesehen sind.

9. Förderstrecke nach Anspruch 8, **dadurch gekennzeichnet, daß** als Mittel Stifte, insbesondere Zylinderstifte (16) o.dgl. vorgesehen sind, die in Ausnehmungen (17) der Förderstrecke (2) gehaltet sind, und an denen die Abdeckung (9) zumindest in der abdeckenden Stellung angreift.

10. Vorrichtung umfassend wenigstens eine eine Abdeckung aufweisende Förderstrecke zum Fördern von stückartigem, zu bearbeitendem oder bearbeitetem Fördergut, insbesondere Fertigungs- oder Montagevorrichtung zum Fertigen oder Montieren eines Werkstücks oder Zuführvorrichtung für eine Fertigungs- oder Montagevorrichtung zum Zuführen der zu bearbeitenden Stückgüter, **dadurch gekennzeichnet, daß** eine Förderstrecke nach einem der Ansprüche 1 bis 9 vorgesehen ist.

## Claims

1. Rail-type conveyor section, with a guide groove along which goods to be worked or having been worked, in particular small components to be assembled by a tool of an assembly apparatus, may be conveyed, the conveyor section being provided with a cover, which covers the conveyor section at least over part of its length and/or breadth, the cover (9) being mounted pivotably or in a hinged manner and being movable between a position covering the conveyor groove (6) and a non-covering position, **characterised in that** the cover (9) may be moved out of the covering position against a restoring force generated by means of one or more spring elements (14), the spring elements (14) constraining the cover (9) into the covering position.

2. Conveyor section according to claim 1, **characterised in that** the spring elements (14) formed as spiral springs are received in recesses (15) provided on the conveyor section (2) and are held by one end and are fixed by the other end to the underside of the cover (9).

3. Conveyor section according to one of the preceding claims, **characterised in that** the cover is pivotable about a hinge-like rotary joint.

4. Conveyor section according to claim 1 or 2, **characterised in that** a tilt edge (12) is formed on the cover (9) about which the cover (9) is pivotable.

5. Conveyor section according to one of the preceding claims, **characterised in that** the cover (9) is fixable in the non-covering position in a self-retaining manner or with holding means.

6. Conveyor section according to claim 5, **characterised in that** in order to permit self-retention in the region of the tilt edge (12) a support plane (13) is provided, with which the cover (9) rests in the open state.

7. Conveyor section according to claim 5, **characterised in that** the holding means are formed as a catch or clamping means which act on the open cover.

8. Conveyor section according to one of the preceding claims, **characterised in that** means are provided for guiding and/or fixing the cover (9) against displacement on the conveyor section (2).

9. Conveyor section according to claim 8, **characterised in that** pins, in particular cylindrical pins (16) or the like are provided as such means, which are held in recesses (17) in the conveyor section (2) and which are acted on by the cover (9) at least in the covering position.

10. Apparatus comprising at least a conveyor section having a cover for conveying goods in piece form to be worked or having been worked, in particular assembly apparatus for assembling a workpiece or feed apparatus for an assembly apparatus for supplying the items to be worked, **characterised in that** a conveyor section according to one of claims 1 to 9 is provided.

## Revendications

1. Chemin de transport en forme de rail du type comportant une rainure de guidage le long de laquelle peut être transporté le produit à transporter en cours d'usinage ou déjà usiné au moyen d'un outil en particulier d'un outillage d'un dispositif de finition ou de montage d'éléments en cours d'usinage ou déjà usinés, et qui est équipé d'un recouvrement qui recouvre le chemin de transport au moins sur une partie de sa longueur et/ou de sa largeur, le recouvrement (9) étant appliqué de manière basculable ou rabattable et déplaçable entre une position recouvrant la rainure de transport (6) et une position ne la recouvrant pas, **caractérisé en ce que** le recouvrement (9) est déplaçable hors de la position de recouvrement à l'encontre d'une force de rappel obtenue au moyen d'un ou plusieurs éléments élastiques (14), le ou les éléments élastiques (14) repoussant le recouvrement (9) dans la position de recouvrement.

2. Chemin de transport selon la revendication 1, **caractérisé en ce que** les éléments élastiques, constitués par des ressorts hélicoïdaux (14) sont reçus et maintenus à une extrémité dans des évidements (15) prévus sur le chemin de transport (2) et fixés à leur autre extrémité sur la face inférieure du recouvrement (9).

3. Chemin de transport selon l'une des revendications 1 et 2, **caractérisé en ce que** le recouvrement peut basculer autour d'une articulation pivotante en forme de charnière.

4. Chemin de transport selon l'une des revendications 1 ou 2, **caractérisé en ce que** le recouvrement (9) est agencé avec une arête de rabattement (12) autour de laquelle le recouvrement (9) peut être rabattu.

5. Chemin de transport selon l'une quelconque des revendications précédentes, **caractérisé en ce que** le recouvrement (9) est immobilisable dans la position non-recouvrante, par auto-arrêt ou grâce à des moyens d'arrêt.

6. Chemin de transport selon la revendication 5, **caractérisé en ce que**, en vue de rendre possible l'auto-arrêt dans la zone de l'arête de rabattement (12), il est prévu un plan d'appui avec lequel le recouvrement (9) est posé à l'état ouvert.

7. Chemin de transport selon la revendication 5, **caractérisé en ce que** le moyen d'arrêt est constitué par un moyen de repos ou un moyen de pincement auquel s'accroche le recouvrement.

8. Chemin de transport selon l'une quelconque des revendications précédentes, **caractérisé en ce que** des moyens sont prévus pour le guidage et/ou la fixation du recouvrement (9) vis-à-vis d'un coulissement du recouvrement (9) sur le chemin de transport (2).

9. Chemin de transport selon la revendication 8, **caractérisé en ce que** comme moyens sont prévues des chevilles, en particulier des chevilles cylindriques qui sont maintenues dans des évidements (17) du chemin de transport (2) et auxquelles s'accroche le recouvrement (9) au moins dans la position de recouvrement.

10. Dispositif englobant au moins un chemin de transport comportant un recouvrement pour le transport de produits individuels en cours d'usinage ou usinés, en particulier un dispositif pour la finition ou le montage d'un outillage, ou un dispositif pour l'amenée ou l'alimentation destiné à un dispositif de finition ou de montage en vue de l'amenée des produits à usiner, **caractérisé en ce qu'**il est prévu un chemin de transport selon l'une quelconque des revendications 1 à 9.
